# EUROPEAN PATENT SPECIFICATION

(11) **EP 1 677 015 B1**
(45) Date of publication and mention of the grant of the patent: **12.08.2015**
(21) Application number: 04791959.2
(22) Date of filing: 01.10.2004
(51) Int. Cl.: F16C 7/02, F16F 1/38, F16F 15/08, B60K 5/12, B60G 7/00

(54) **TORQUE ROD STRUCTURE**
DREHSTABKONSTRUKTION
STRUCTURE DE BIELLE DE TORSION

(30) Priority: 03.10.2003 JP 2003345741
(43) Date of publication of application: 05.07.2006
(73) Proprietor: Bridgestone Corporation, Tokyo 104-8340 (JP); Honda Motor Co., Ltd., Tokyo (JP)
(72) Inventor: KAMEI, Naoyuki, c/o BRIDGEST0NE CORPORATION, Tokyo 104-8340 (JP); KOJIMA, Hiroshi, c/o BRIDGEST0NE CORPORATION, Tokyo 104-8340 (JP)
(74) Representative: Oxley, Robin John George
(86) International application number: PCT/JP2004/014492
(87) International publication number: WO 2005/033529

(56) References cited:
- EP-A- 0 712 741
- EP-A- 1 336 514
- WO-A-00/04296
- WO-A-02/24394
- WO-A-03/101767
- JP-A- 1 126 413
- JP-A- 11 101 286
- JP-A- 11 218 173
- JP-A- 58 188 712
- JP-A- 2000 272 313
- JP-A- 2002 166 714
- JP-A- 2003 002 025

## Description

### TECHNICAL FIELD

The present invention relates to a torque rod for arresting the movement of an engine of a motor vehicle, and related to improving torque rods made of resin or metal that connect a pair of rubber bushes or cylinders.

### BACKGROUND ART

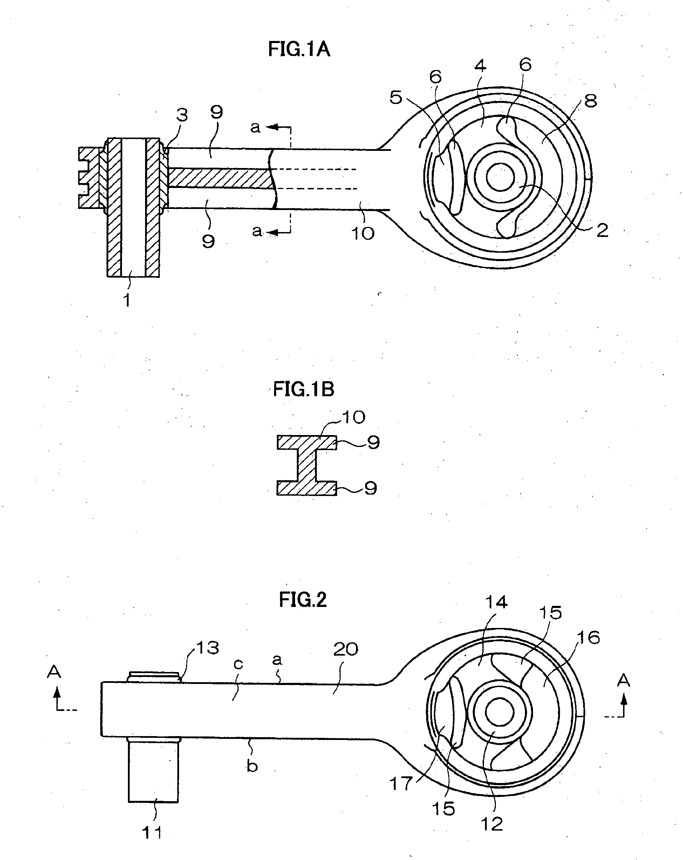

Conventionally with torque rods, there is, as shown in Figure 1A, a torque rod 10, connecting a pair of rubber bushes 3,4 and cylinders 1,2, is usually made of resin, iron or aluminum. The core of the rod portion is either a rectangular cross-sectional shape or H section cross section ribbed structure (see Figure 1B and the patent publication reference 1). 6 are hollow portions, 5,8 are rubber stoppers, 9 is a rib formed on the surface. Figure 1B is the cross section of Figure 1A at the line "a-a".

However, for such a torque rod 10, whilst this can satisfy the requirements in terms of raising the compression strength and tensile strength, it is not a shape which takes into account other requirements. For example, the current situation is that the demands in recent years for bending stiffness and twisting stiffness are not adequately provided for. That is, conventionally in the shape of torque rods connecting cylindrical rubber bushes, a rib is put on the surface, and by doing so the aimed for compression and tensional strength can be achieved. However, against bending and twisting, the secondary moment and section modulus is lowered, and, for example, it is pointed out that the twisting stiffness cannot be increased.
Patent Publication Reference 1: Japanese Patent Application Laid-Open Heisei 10-299805.

WO 02/24394 discloses a torque rod structure comprising a rod portion, the cross-sectional shape of the central portion of the rod portion forming an approximately rectangular shape and one pair of opposing faces of the rectangular shape forming a shape which bulges outwards, such that the central cross-section of the of the rod portion is thicker than the ends thereof and wherein the rod portion is shaped with a plurality of void portions.

### DISCLOSURE OF THE INVENTION

### PROBLEMS ADDRESSED BY THE INVENTION

The invention is made to solve the above problems, and addresses the requirements by providing an improved shape of the rod portion with increased stiffness to bending and twisting.

### MEANS OF SOLVING THE PROBLEMS

A first aspect of the invention is a torque rod as set out in Claim 1.

A second aspect of the invention is a torque rod as set out in Claim 8.

### EFFECT OF THE INVENTION

The invention has a configuration which is one of the above torque rod structures, and in all of the configurations by adding the great improvement in the rod portion, not only does the torque rod have compression and tensional strength, but also significantly increased bending and twisting stiffness. Specific structures include a rod portion having plural void (honeycomb) structure (the first aspect), or having rib structure (the second aspect). By these structures, and further by preferably thickening the central cross-section, the twisting stiffness can be increased to 2 to 3 times that of a conventional ribbed shape.

### BRIEF DESCRIPTION OF THE DRAWINGS

Figure 1A is a diagram showing a structure of a conventional torque rod.
Figure 1B is a diagram showing a structure of a conventional torque rod.
Figure 2 is a front view of a torque rod, which is not according to the invention.
Figure 3 is a side view of the torque rod of Figure 2.
Figure 4 is a cross-section taken on the line A-A of Figure 2.
Figure 5 is a cross-section taken on the line B-B of Figure 3.
Figure 6 is a cross-section taken on the line C-C of Figure 4.
Figure 7 is a front view of a torque rod of the first aspect of the invention.
Figure 8 is a side view of the torque rod of Figure 7.
Figure 9 is a cross-section taken on the line D-D of Figure 7.
Figure 10 is a cross-section taken on the line E-E of Figure 8.
Figure 11 is a cross-section taken on the line F-F of Figure 10.
Figure 12 is a front view of a torque rod of the second aspect of the invention.
Figure 13 is a side view of the torque rod of Figure 12.
Figure 14 is a cross-section taken on the line G-G of Figure 12.
Figure 15 is a cross-section taken on the line H-H of Figure 13.
Figure 16 is a cross-section taken on the line I-I of Figure 13.
Figure 17 is a cross-section taken on the line J-J of Figure 13.

### BEST MODE FOR CARRYING OUT THE INVENTION

The torque rod of the invention is a torque rod which is made of resin or metal, for example cast iron or aluminum. The invention includes a rod portion formed with plural void portions (the first aspect of the invention), or with plural hole portions forming cross-shaped ribs (the third aspect of the invention), to improve the twisting and bending stiffness of the rod portion. Further, in the invention, a structure is included wherein the central cross-section of the rod portion is made thicker than the ends thereof, and the like.
By such structures, the above aims can be achieved (improvement in the twisting and bending stiffness of the rod portion).

For the material to configure the torque rod, this can be, for example, made of metals, typically iron or aluminum alloys, or made of resins called engineering plastics, and amongst these polyamide is the most preferable applicable.

The torque rod can be manufactured by a resin or aluminum casting method and at the same time, for example, a processing method such as a core method or AGI processing method can be used to form the hollow center. By these methods, a conventional cast portion is made hollowed out to become a thick walled rod portion, and it is most appropriate that by making the central cross-section of the rod portion thicker relative to that of the two ends, the polar moment of inertia of area and the polar modulus of section can be increased, making it possible to yield an increase in strength together with a reduction in weight.

The first aspect and second aspects are preferably used when, due to constraints in the mould release construction and the like, the torque rod cannot be one of a hollow construction, and have a construction which can be removed from the mould in one direction or both directions. This construction, in order to increase the polar modulus of section, results in a rod portion in a comb shape or lattice shape (cross-shaped ribs). In these constructions too, of course, a bulging central portion of the rod is also used.

### EXAMPLE 1

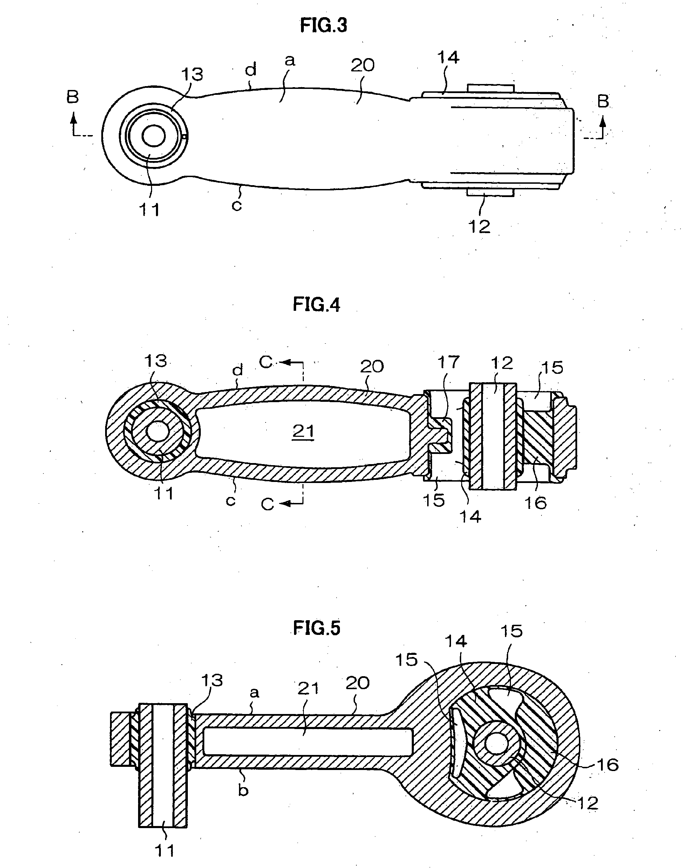

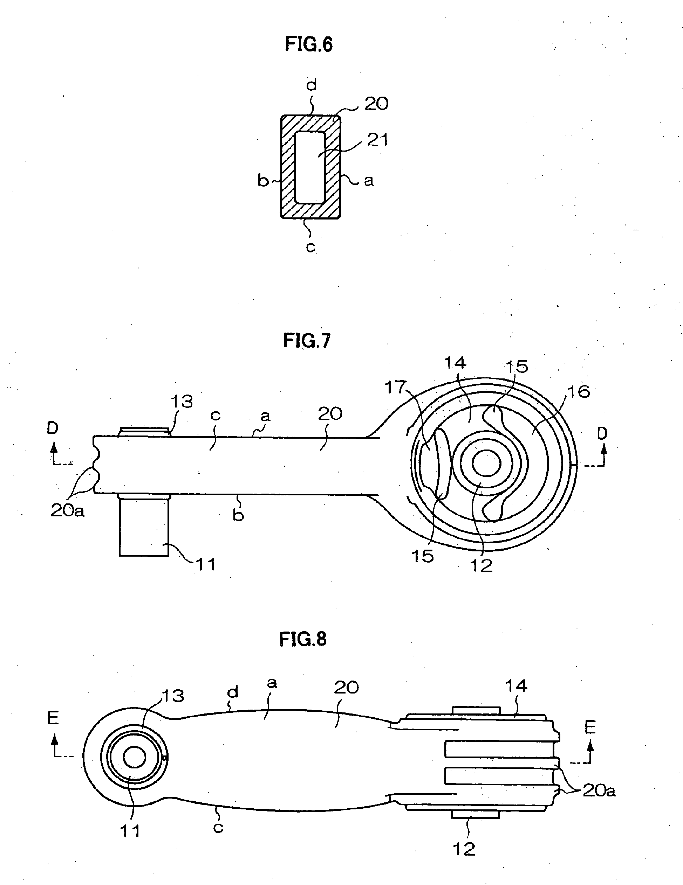

Figures 2 to 6 are examples which are not according to the invention, Figure 2 is a front view, Figure 3 is a side view, Figure 4 is a cross-section on the line A-A, Figure 5 is a cross-section on the line B-B, Figure 6 is a cross-section on the line C-C. The numerals 11,12 are a pair of internal cylinders disposed at 90 degrees to each other, 13 is a rubber bush which covers the internal cylinder 11, 14 is a rubber bush which covers the internal cylinder 12, 15 is a hollow portion formed on the inner and outer sides of the internal cylinder 12, and stoppers 16,17 are provided sandwiched by the hollow portion 15. The torque rod 20 made of a polyamide resin is connected thereto.

Because the internal cylinder 11 is surrounded by rubber bush 13 it does not move, but the other internal cylinder 12 is comparatively free to move because of the hollow portion 15, and in this case, the movement thereof becomes regulated by impacting with the stoppers 16, 17.

The torque rod 20 is approximately rectangular in cross-section on the line B-B, and the corresponding faces "a" and "b" are formed parallel. Faces "c" and "d" form a shape in which the central portion bulges, and the hollow portion 21 is inside this portion.

By this shape, the bending stiffness and twisting stiffness each become about three times that of a conventional torque rod.

### EXAMPLE 2

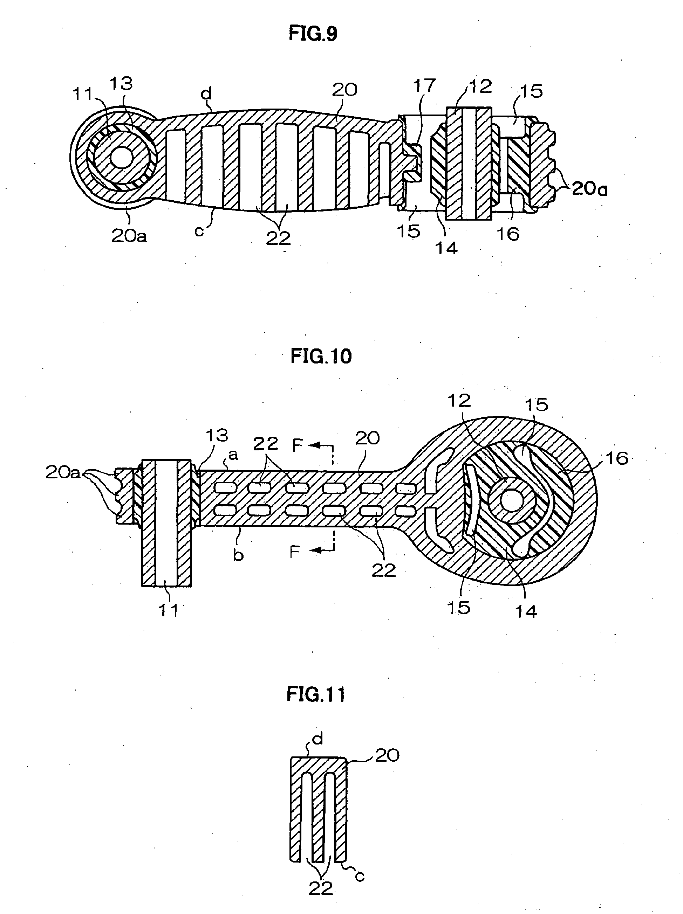

Figures 7 to 11 are examples of the first aspect of the invention, Figure 7 is a front view, Figure 8 is a side view, Figure 9 is a cross-section on the line D-D, Figure 10 is a cross-section on the line E-E, and Figure 11 is a cross-section on the line F-F. The numerals 11 to 17 are the same as in the previous example and the explanation thereof will be omitted.

The torque rod 20 made of polyamide is approximately rectangular in cross-section on the line B-B, and the corresponding faces "a" and "b" are formed parallel. Faces "c" and "d" form a shape in which the central portion bulges, and the on the face "c" two rows of void portions 22 are formed. 20a is a rib formed on the outer periphery of the torque rod 20.

By having such a shape, the bending stiffness and twisting stiffness each become about twice that of a conventional torque rod.

### EXAMPLE 3

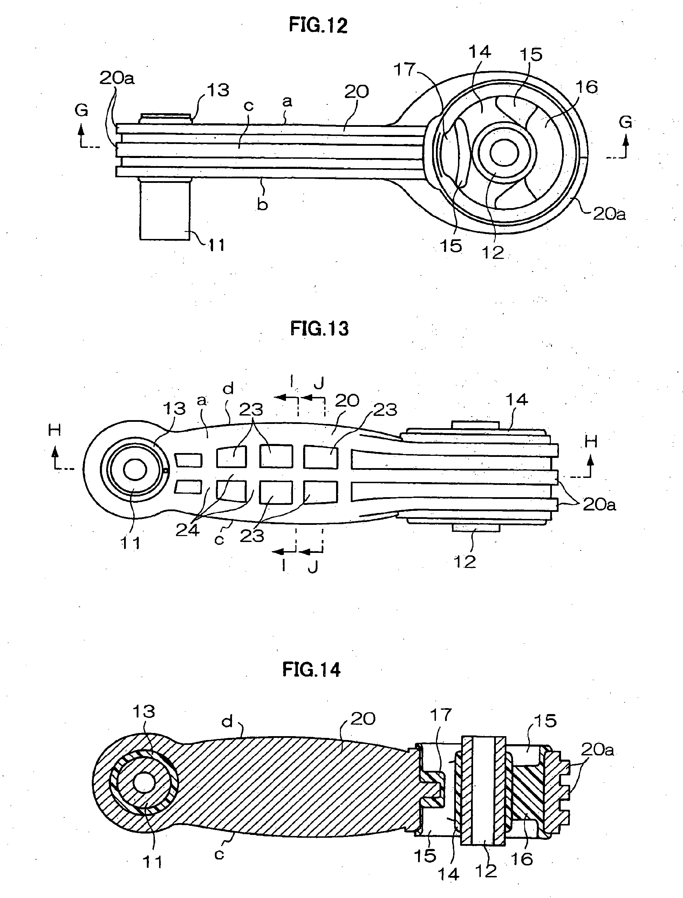

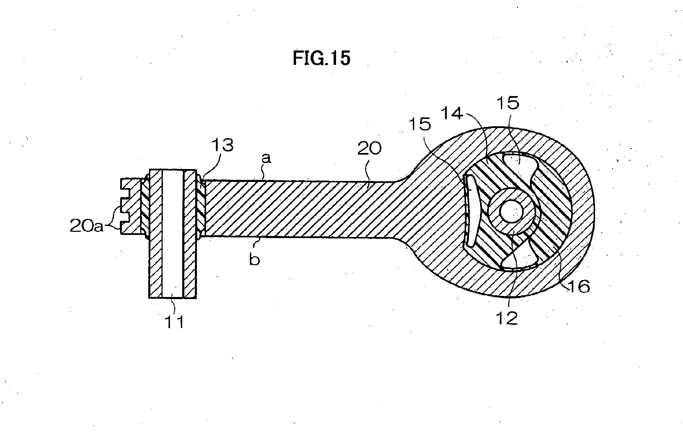

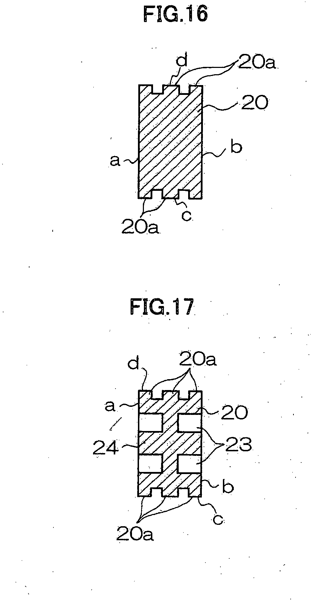

Figures 12 to 17 are examples of the second aspect of the invention, Figure 12 is a front view, Figure 13 is a side view, Figure 14 is a cross-section on the line G-G, Figure 15 is a cross-section on the line H-H, Figure 16 is a cross-section on the line I-I, and Figure 17 is a cross-section on the line J-J. The numerals 11 to 17 are the same as in the previous examples and the explanation thereof will be omitted.

The torque rod 20 made of polyamide is approximately rectangular in cross-section on the line B-B, and the corresponding faces "a" and "b" are formed parallel. Faces "c" and "d" form a shape in which the central portion bulges, and on the parallel faces "a" and "b" two rows of blind holes 23 are formed. Overall, cross-shaped ribs 24 are formed.

By having such a shape, the bending stiffness and twisting stiffness each become about 2:5 times that of a conventional torque rod.

### INDUSTRIAL APPLICABILITY

As described above, in the invention, by changing the construction of a torque rod, the bending stiffness and twisting stiffness can be greatly improved, and these rods are applicable not only in the field of torque rods for motor vehicles but in a great number of fields. The range of applicability is extremely wide.

### EXPLANATION OF NUMERALS

- 11,12: Internal Cylinders
- 20: Torque Rod
- 21: Hollow Portion
- 22: Void Portions
- 23: Blind Holes
- 24: Cross-Shaped Ribs

## Claims

1. A torque rod for arresting the movement of an engine of a motor vehicle (20), the torque rod structure comprising a rod portion with a built-in pair of rubber bushes (13,14), which are formed respectively around a pair of cylinders (11,12), the rod portion linking both the rubber bushes (13,14), wherein
the cross-sectional shape of the central portion of the rod portion forms an approximately rectangular shape, and one pair of opposing faces (c,d) of the rectangular shape form a shape which bulges outwards, such that the central cross-section of the of the rod portion is thicker than the ends thereof;
wherein the rod portion is shaped with a plurality of void portions (22); and wherein the void portions (22) are formed on the bulging faces (c,d).

2. The torque rod structure (20) according to claim 1, wherein cross-shaped ribs (24) are formed on the rod portion.

3. The torque rod structure (20) according to claim 1, wherein the shape of the cross-section in the vicinity of the central portion has along the longitudinal direction of the rod portion a series of alternate cross-sections which have a notched portion and cross-sections which do not have a notched portion.

4. The torque rod structure (20) according to claim 3, wherein the void portions (22) correspond to the notched portions.

5. The torque rod structure (20) according to claim 4, wherein the void portions are formed as two rows of blind holes.

6. The torque rod structure according to claim 3, wherein the notched portions are formed on the bulging faces (c,d).

7. The torque rod structure according to claim 3, wherein the rod has a honey comb shape.

8. A torque rod (20), the torque rod structure comprising a rod portion with a built-in pair of rubber bushes (13,14), which are formed respectively around a pair of cylinders (11,12), the rod portion linking both the rubber bushes (13,14), wherein
the cross-sectional shape of the central portion of the rod portion forms an approximately rectangular shape, and one pair of opposing faces (c,d) of the rectangular shape form a shape which bulges outwards, such that the central cross-section of the of the rod portion is thicker than the ends thereof and the other pair of opposing faces (a,b) of the rectangular shape are formed parallel;
wherein the shape of the cross-section in the vicinity of the central portion has along the longitudinal direction of the rod portion a series of alternate cross-sections which have a notched portion and cross-sections which do not have a notched portion;
wherein the notched portions are formed as two rows of blind holes (23) on the parallel formed faces (a,b) of the rectangular shape, the blind holes (23) forming cross-shaped ribs (24) on the rod portion.

## Patentansprüche

1. Drehstab (20) zum Anhalten der Bewegung eines Motors eines Kraftfahrzeugs, wobei die Drehstabstruktur einen Stababschnitt mit einem eingebauten Paar von Gummimuffen (13, 14), die jeweils um ein Paar von Zylindern (11, 12) geformt sind, umfasst, wobei der Stababschnitt die beiden Gummimuffen (13, 14) verbindet, wobei
die Querschnittsform des Mittelabschnitts des Stababschnitts eine annähernd rechteckige Form bildet und ein Paar von gegenüberliegenden Flächen (c, d) der rechteckigen Form eine Form bildet, die sich nach außen ausbaucht, derart, dass der Mittelquerschnitt des Stababschnitts dicker ist als die Enden desselben,
wobei der Stababschnitt mit mehreren hohlen Abschnitten (22) geformt ist und wobei die hohlen Abschnitte (22) an den ausgebauchten Flächen (c, d) geformt sind.

2. Drehstabstruktur (20) nach Anspruch 1, wobei kreuzförmige Rippen (24) an dem Stababschnitt geformt sind.

3. Drehstabstruktur (20) nach Anspruch 1, wobei die Form des Querschnitts in der Nähe des Mittelabschnitts entlang der Längsrichtung des Stababschnitts eine Reihe von abwechselnden Querschnitten, die einen gekerbten Abschnitt haben, und Querschnitten, die keinen gekerbten Abschnitt haben, hat.

4. Drehstabstruktur (20) nach Anspruch 3, wobei die hohlen Abschnitte (22) den gekerbten Abschnitten entsprechen.

5. Drehstabstruktur (20) nach Anspruch 4, wobei die hohlen Abschnitte als zwei Reihen von Grundlöchern geformt sind.

6. Drehstabstruktur nach Anspruch 3, wobei die gekerbten Abschnitte an den ausgebauchten Flächen (c, d) geformt sind.

7. Drehstabstruktur nach Anspruch 3, wobei der Stab eine Bienenwabenform hat.

8. Drehstab (20), wobei die Drehstabstruktur einen Stababschnitt mit einem eingebauten Paar von Gummimuffen (13, 14), die jeweils um ein Paar von Zylindern (11, 12) geformt sind, umfasst, wobei der Stababschnitt die beiden Gummimuffen (13, 14) verbindet, wobei
die Querschnittsform des Mittelabschnitts des Stababschnitts eine annähernd rechteckige Form bildet und ein Paar von gegenüberliegenden Flächen (c, d) der rechteckigen Form eine Form bildet, die sich nach außen ausbaucht, derart, dass der Mittelquerschnitt des Stababschnitts dicker ist als die Enden desselben, und das andere Paar von gegenüberliegenden Flächen (a, b) der rechteckigen Form parallel geformt ist,
wobei die Form des Querschnitts in der Nähe des Mittelabschnitts entlang der Längsrichtung des Stababschnitts eine Reihe von abwechselnden Querschnitten, die einen gekerbten Abschnitt haben, und Querschnitten, die keinen gekerbten Abschnitt haben, hat,
wobei die hohlen Abschnitte als zwei Reihen von Grundlöchern (23) an den parallel geformten Flächen (a, b) der rechteckigen Form geformt sind, wobei die Grundlöcher (23) kreuzförmige Rippen (24) an dem Stababschnitt bilden.

## Revendications

1. Barre de torsion (20) destinée à arrêter le mouvement d'un moteur de véhicule automobile, la structure de barre de torsion comprenant une portion de barre comportant une paire de douilles en caoutchouc (13, 14) intégrées qui sont formées respectivement autour d'une paire de cylindres (11, 12), la portion de barre reliant les deux douilles en caoutchouc (13, 14),
la forme de la section transversale de la partie centrale de la portion de barre ayant un profil à peu près rectangulaire et une paire de faces opposées (c, d) du profil rectangulaire ayant une forme bombée vers l'extérieur, de sorte que la section transversale centrale de la portion de barre est plus épaisse que ses extrémités ;
la portion de barre présentant une pluralité de portions vides (22) ; et
les portions vides (22) étant formées sur les faces convexes (c, d).

2. Structure de barre de torsion (20) selon la revendication 1, des nervures cruciformes (24) étant formées sur la portion de barre.

3. Structure de barre de torsion (20) selon la revendication 1, le profil de la section transversale au voisinage de la partie centrale présentant, le long de la direction longitudinale de la portion de barre, une série de sections transversales pourvues d'une portion entaillée qui alternent avec des sections transversales non pourvues d'une portion entaillée.

4. Structure de barre de torsion (20) selon la revendication 3, les portions vides (22) correspondant aux portions entaillées.

5. Structure de barre de torsion (20) selon la revendication 4, les portions vides se présentant sous la forme de deux rangées de trous borgnes.

6. Structure de barre de torsion selon la revendication 3, les portions entaillées étant formées sur les faces convexes (c, d).

7. Structure de barre de torsion selon la revendication 3, la barre ayant une forme en nid d'abeilles.

8. Barre de torsion (20), la structure de barre de torsion comprenant une portion de barre comportant une paire de douilles en caoutchouc (13, 14) intégrées qui sont formées respectivement autour d'une paire de cylindres (11, 12), la portion de barre reliant les deux douilles en caoutchouc (13, 14),
la forme de la section transversale de la partie centrale de la portion de barre ayant un profil à peu près rectangulaire et une paire de faces opposées (c, d) du profil rectangulaire ayant une forme bombée vers l'extérieur, de sorte que la section transversale centrale de la portion de barre est plus épaisse que ses extrémités, et l'autre paire de faces opposées (a, b) du profil rectangulaire étant formée de manière à ce que ces faces soient parallèles ;
le profil de la section transversale au voisinage de la partie centrale présentant, le long de la direction longitudinale de la portion de barre, une série de sections transversales pourvues d'une portion entaillée qui alternent avec des sections transversales non pourvues d'une portion entaillée ;
les portions entaillées se présentant sous la forme de deux rangées de trous borgnes (23) sur les faces parallèles (a, b) du profil rectangulaire, les trous borgnes (23) formant des nervures cruciformes (24) sur la portion de barre.
